# EUROPÄISCHE PATENTANMELDUNG

(11) **EP 3 007 307 A1**
(43) Veröffentlichungstag der Anmeldung: **13.04.2016**
(21) Anmeldenummer: 14188446.0
(22) Anmeldetag: 10.10.2014
(51) Int. Cl.: H02J 7/00, H02J 7/04

(54) **Vorrichtung zum Laden von Akkumulatoren**

(71) Anmelder: DORMA Deutschland GmbH, 58256 Ennepetal (DE)
(72) Erfinder: Bruckert, Michael, 58256 Ennepetal (DE)
(74) Vertreter: Balder IP Law, S.L.

(57) **Zusammenfassung**

Die Erfindung betrifft eine Vorrichtung (1) zum Laden von Akkumulatoren (20). Diese umfasst einen Laderegler (2), zum Bereitstellen einer Ladespannung (U_{L}), wobei der Laderegler (2) einen Regelkreis umfasst, in dem die Ladespannung (U_{L}) mittels eines ersten Spannungsteilers (7) geteilt wird und eine durch den ersten Spannungsteiler (7) verringerte Spannung (U_{R}) als Regelsignal zur Stabilisierung der Ladespannung (U_{L}) durch den Laderegler (2) genutzt wird, einen Spannungssensor (3), zum Erfassen der Ladespannung (U_{L}), einen Temperatursensor (4) zum Messen einer Temperatur, eine Steuereinheit (5), die eine optimale Ladespannung basierend auf der gemessenen Temperatur ermittelt und ein Korrektursignal basierend auf einer Abweichung der Ladespannung (U_{L}) von der optimalen Ladespannung ausgibt, und eine Korrektureinheit (6), die mittels des Korrektursignals auf zumindest einen Widerstand des ersten Spannungsteilers (7) Einfluss nimmt.

## Beschreibung

Die Erfindung betrifft eine Vorrichtung zum Laden von Akkumulatoren.

Akkumulatoren, insbesondere Blei-Gel-Akkus, sollten bis zu 80% ihrer Kapazität mit einem konstanten Strom geladen werden. Danach, also wenn der Akkumulator sich in einem Bereich über 80% seiner Kapazität befindet, sollte dieser mit einer konstanten Spannung von typischerweise 2,275 Volt pro Zelle geladen werden. Dieser typische Spannungswert bezieht sich auf eine Umgebungstemperatur von 20 Grad. Wird der Akku aber bei einer höheren Umgebungstemperatur als die genannten 20 Grad geladen, so verringert sich die Ladespannung für jede Zelle des Akkumulators um 4 Millivolt pro Grad Celsius. Somit ergibt sich beispielsweise, dass die Ladespannung eines 24-Volt-Akkus, welcher aus zwölf Zellen besteht, bei einer Temperatur von 40 Grad nicht 27,3 Volt, sondern 26,3 Volt betragen muss. Wird der Akkumulator mit einer für den gegebenen Temperaturbereich zu hohen Spannung geladen, nimmt der Akkumulator Schaden.

Aufwändige Ladeschaltungen nach dem Stand der Technik ermöglichen bereits eine Veränderung der Ladespannung bei sich ändernder Umgebungstemperatur. Solche Ladeschaltungen sind jedoch bislang sehr aufwändig und somit kostenintensiv in der Herstellung, wodurch diese nur in professionellen Ladegeräten zu finden sind.

Aus der EP1612907A2 ist ein Akkupack mit einem analogen Temperatursensor bekannt, wobei ein Ladungsvorgang durch ein zugehöriges Ladegerät gestoppt wird, wenn die Temperatur des Akkumulators einen Grenzwert überschreitet.

Es ist Aufgabe der Erfindung eine einfache und kostengünstige Vorrichtung zum Laden von Akkumulatoren zu schaffen, die ein temperaturgeführtes Laden Akkumulatoren erlaubt.

Die Lösung der Aufgabe erfolgt durch die Merkmale des Anspruches 1.

Somit wird die Aufgabe gelöst durch eine Vorrichtung zum Laden von Akkumulatoren umfassend einen Laderegler zum Bereitstellen einer Ladespannung, wobei der Laderegler einen Regelkreis umfasst, in dem die Ladespannung mittels eines ersten Spannungsteilers geteilt wird und eine durch den ersten Spannungsteiler verringerte Spannung als Regelsignal zur Stabilisierung der Ladespannung durch den Laderegler genutzt wird, einen Spannungssensor zum Erfassen der Ladespannung, einen Temperatursensor zum Messen einer Temperatur, eine Steuereinheit, die eine optimale Ladespannung basierend auf der gemessenen Temperatur ermittelt und ein Korrektursignal basierend auf einer Abweichung der Ladespannung von der optimalen Ladespannung ausgibt, und eine Korrektureinheit, die mittels des Korrektursignals auf zumindest einen Widerstand des ersten Spannungsteilers Einfluss nimmt. Eine solche Vorrichtung ist vorteilhaft, da diese ein temperaturgeführtes Laden eines Akkumulators auf besonders einfache Weise realisiert, womit eine besonders kostengünstige und zuverlässige Vorrichtung zum Laden von Akkumulatoren geschaffen wird. Die Vorrichtung ist ferner vorteilhaft, da die Lebensdauer von Akkumulatoren, welche mit dieser Vorrichtung geladen werden, deutlich erhöht wird. Die optimale Ladespannung ist dabei insbesondere eine maximale Spannung, mit welcher ein mit der Vorrichtung verbundener Akkumulator geladen werden kann, ohne dass der Akkumulator dadurch Schaden nimmt. Die optimale Ladespannung ist aufgrund der elektrochemischen Eigenschaften des Akkumulators abhängig von der Temperatur des Akkumulators.

Ebenfalls wird die Aufgabe gelöst durch ein Verfahren zum Laden von Akkumulatoren umfassend die Schritte eines Bereitstellens einer Ladespannung durch einen Laderegler, wobei der Laderegler einen Regelkreis umfasst, in dem die Ladespannung mittels eines ersten Spannungsteilers geteilt wird und eine durch den ersten Spannungsteiler verringerte Spannung als Regelsignal zur Stabilisierung der Ladespannung durch den Laderegler genutzt wird, eines Erfassens der Ladespannung, eines Messens einer Temperatur durch einen Temperatursensor, eines Ermittelns einer optimale Ladespannung, wobei die optimale Ladespannung basierend auf der gemessenen Temperatur ermittelt wird, eines Ausgebens eines Korrektursignals basierend auf einer Abweichung der Ladespannung von der optimalen Ladespannung, und eines Einflussnehmens auf zumindest einen Widerstand des ersten Spannungsteilers mittels des Korrektursignals. Ein solches Verfahren ist vorteilhaft, da durch dieses ein temperaturgeführtes Laden eines Akkumulators auf besonders einfache und kostengünstige Weise ermöglicht wird. Dabei nimmt die Korrektureinheit insbesondere derart Einfluss auf einen Widerstand des ersten Spannungsteilers Einfluss, dass die Ladespannung einen Spannungswert der optimalen Ladespannung annimmt.

Die Unteransprüche haben vorteilhafte Weiterbildungen der Erfindung zum Inhalt.

Es ist vorteilhaft, wenn der Temperatursensor eine Temperatur des Akkumulators misst. Somit wird es ermöglicht die optimale Ladespannung besonders präzise zu ermitteln.

Ferner ist es vorteilhaft, wenn der Temperatursensor die Temperatur fortwährend misst und die Steuereinheit die optimale Ladespannung kontinuierlich ermittelt. Somit wird ein Einfluss von Temperaturschwankungen minimiert.

Es ist vorteilhaft, wenn der Spannungssensor einen zweiten Spannungsteiler umfasst. Somit kann der Steuereinheit eine Messspannung zugeführt werden, die deutlich niedriger als die Ladespannung ist. Dies ermöglicht eine kostengünstige Auslegung der Steuereinheit, da durch diese nur geringe Spannungen verarbeitet werden müssen. Ferner kann somit eine Verwendung baugleicher Steuereinheiten für unterschiedliche Akkumulatoren, welche unterschiedliche Ladespannungen erfordern, ermöglicht werden.

Ebenso vorteilhaft ist es, wenn die Korrektureinheit einen Transistor umfasst, der parallel zu einem Widerstand des ersten Spannungsteilers geschaltet ist. Dies ermöglicht eine besonders einfache Ansteuerung der Korrektureinheit durch die Steuereinheit.

Ferner ist es vorteilhaft, wenn das Korrektursignal ein pulsweitenmoduliertes Signal ist. Somit kann auf einfach Weise eine stufenlose Korrektur der Ladespannung aus einer digitalen Steuereinheit heraus erfolgen.

Des Weiteren ist es vorteilhaft, wenn der Laderegler einen Kondensator zum Glätten des Regelsignals umfasst. Somit werden Instabilitäten in der Regelschleife des Reglers vermieden, um eine stabile Ausgangsspannung zu gewährleisten.

Auch ist es vorteilhaft, wenn die Steuereinheit das Korrektursignal ferner basierend auf einer Bauart oder einer Anzahl angeschlossener Akkumulatoren ermittelt. Abhängig von der Bauart kann ein Akkumulator mehr oder weniger Zellen umfassen. Da die optimale Ladespannung von der Anzahl der Zellen in einem Akkumulator abhängt, wird somit eine optimale Ladespannung gewährleistet. Die optimale Ladespannung ist ebenfalls von der Anzahl angeschlossener Akkumulatoren abhängig, insbesondere wenn die Akkumulatoren dabei in Serie geschaltet sind. Auch in diesem Fall wird eine Ladespannung gewährleistet, die gleich einer optimalen Ladespannung ist.

Ferner ist es vorteilhaft, wenn die Steuereinheit das Korrektursignal erst in einer abschließenden Phase eines Ladevorgangs ausgibt. Somit wird es ermöglicht, dass der Akkumulator in einer anfänglichen Phase durch eine andersartig gewählte vorteilhafte Ladespannung oder einen vorteilhaften Ladestrom geladen wird. Somit können kurze Ladezeiten und eine hohe Lebensdauer des Akkumulators gewährleistet werden.

Die Erfindung wird nun anhand eines Ausführungsbeispiels näher beschrieben. Dabei zeigen:
- Figur 1: eine schematische Darstellung einer beispielhaften erfindungsgemäßen Vorrichtung zum Laden von Akkumulatoren mit einem daran angeschlossenen Akkumulator, und

- Figur 2: ein Schaltbild des Ladereglers mit einer Korrektureinheit und des Spannungssensors der in Figur 1 dargestellten Vorrichtung zum Laden von Akkumulatoren.

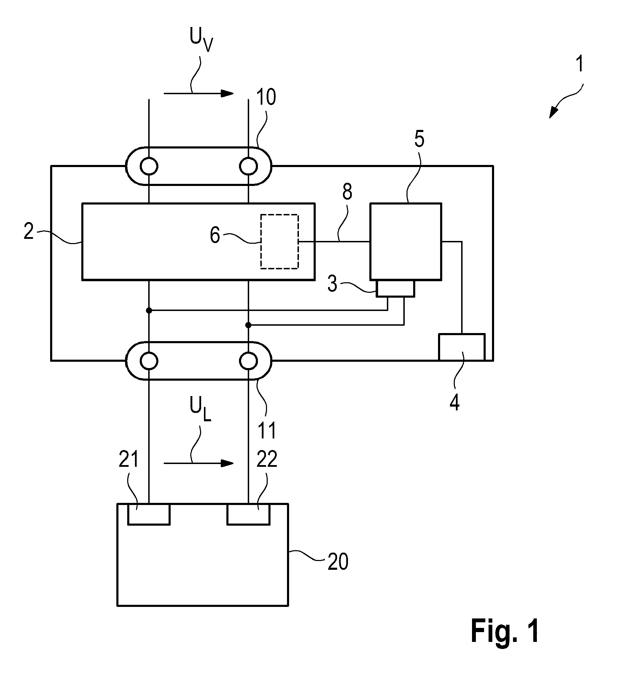

Die Figur 1 zeigt eine beispielhafte erfindungsgemäße Vorrichtung 1 zum Laden von Akkumulatoren 20. Die Vorrichtung 1 weist einen Versorgungseingang 10 und einen Ladeausgang 11 auf. An dem Versorgungseingang 10 wird bei einem Betrieb der Vorrichtung zum Laden von Akkumulatoren eine Versorgungsspannung U_{V} angelegt. In dieser beispielhaften Ausführungsform sei die Versorgungsspannung U_{V} gleich einer Gleichspannung von 35 Volt. Der Ladeausgang 11 ist dazu geeignet, einen Akkumulator 20 an die Vorrichtung 1 zum Laden von Akkumulatoren anzuschließen, um diesen zu laden. Der Akkumulator 20 weist typischerweise einen ersten Pol 21 und einen zweiten Pol 22 auf. Der Ladeausgang 11 ist ein zweipoliger Anschluss, wobei jeweils ein Pol des Akkumulators 20 mit einem Pol des Ladeausgangs 11 verbunden ist, falls der Akkumulator 20 mit der Vorrichtung 1 zum Laden von Akkumulatoren verbunden ist.

Die Vorrichtung 1 zum Laden von Akkumulatoren 20 umfasst einen Laderegler 2 zum Bereitstellen der Ladespannung UL. Dazu ist der Laderegler 2 mit dem Versorgungseingang 10 verbunden. Ferner ist der Laderegler 2 mit dem Ladeausgang 11 verbunden. Durch den Laderegler 2 wird die Versorgungsspannung U_{V} in eine Ladespannung U_{L} umgesetzt, welche dann an dem Ladeausgang 11 zum laden eines Akkumulators 20 bereitgestellt wird. Der Laderegler 2 umfasst einen in Figur 1 nicht dargestellten Regelkreis, durch den die Ladespannung U_{L} stabilisiert wird.

Die Vorrichtung 1 zum Laden von Akkumulatoren 20 umfasst ferner einen Spannungssensor 3 zum Erfassen der Ladespannung UL. Dazu ist der Spannungssensor 3 über jeweils eine Messleitung mit den beiden Polen des Ladeausgangs 11 verbunden. Der Spannungssensor 3 ist dabei ein Sensor, der die Ladespannung U_{L} erfasst und in einen analogen oder digitalen Spannungsmesswert umsetzt, welcher die Ladespannung U_{L} repräsentiert. In der hier gezeigten Ausführungsform ist der Spannungsmesswert ein analoger Wert.

Die Vorrichtung 1 zum Laden von Akkumulatoren 20 umfasst ferner einen Temperatursensor 4 zum Messen einer Temperatur. Der Temperatursensor 4 ist in dieser Ausführungsform an einem Gehäuse der Vorrichtung 1 zum Laden von Akkumulatoren angeordnet. In alternativen Ausführungsformen ist der Temperatursensor 4 an dem zu ladenden Akkumulator 20 angeordnet oder in einer Umgebung der Vorrichtung 1 zum Laden von Akkumulatoren 20 angeordnet.

Die Vorrichtung 1 zum Laden von Akkumulatoren 20 umfasst ferner eine Steuereinheit 5, die eine optimale Ladespannung basierend auf der gemessenen Temperatur ermittelt und ein Korrektursignal basierend auf einer Abweichung der Ladespannung U_{L} von der optimalen Ladespannung ausgibt. Dazu ist die Steuereinheit 5 mit dem Spannungssensor 3 und dem Temperatursensor 4 verbunden. Der Steuereinheit 5 wird von dem Spannungssensor 3 der Spannungsmesswert geliefert und von dem Temperatursensor 4 ein Temperaturmesswert geliefert, welcher die gemessene Temperatur repräsentiert. Die Steuereinheit 5 ist in dieser Ausführungsform eine digitale Recheneinheit. In anderen Ausführungsformen kann die Steuereinheit 5 jedoch auch eine analoge Schaltung sein. Zur Verarbeitung des Spannungsmesswertes und des Temperaturmesswertes werden diese Messwerte in digitale Signale umgesetzt. In der Steuereinheit 5 ist eine Tabelle gespeichert, in der für jede gemessene Temperatur eine optimale Ladespannung für den Akkumulator 20 hinterlegt ist. Basierend auf dem Temperaturmesswert wird die Tabelle ausgelesen und somit die optimale Ladespannung ermittelt. Abhängig davon, ob die durch den Spannungsmesswert dargestellte Ladespannung U_{L} größer oder kleiner als die ermittelte optimale Ladespannung ist, wird ein Korrektursignal erzeugt und über eine Steuerleitung 8 an eine Korrektureinheit 6 übertragen.

Die optimale Ladespannung ist eine temperaturabhängige Spannung, die in dieser Ausführungsform mittels des Temperaturmesswertes des Temperatursensors 4 ermittelt wird. Das Korrektursignal ist in dieser beispielhaften Ausführungsform ein pulsweitenmoduliertes Signal. Dabei wird die Pulsweite des Korrektursignals in dieser Ausführungsform von der Steuereinheit 5 vergrößert, falls die aktuell ausgegebene Ladespannung U_{L} kleiner als die aktuelle optimale Ladespannung ist, welche basierend auf einer durch den Temperatursensor 4 erfassten aktuellen Temperatur ermittelt wird. Die Pulsweite des Korrektursignals wird in dieser Ausführungsform von der Steuereinheit 5 verkleinert, falls die aktuell ausgegebene Ladespannung U_{L} größer als die aktuelle optimale Ladespannung ist, welche basierend auf einer durch den Temperatursensor 4 erfassten aktuellen Temperatur ermittelt wird.

Die in dieser Ausführungsform gezeigte Ausführungsform ist für einen Temperaturbereich zwischen 0°C und 50°C optimiert. So wird bei einer von dem Temperatursensor 4 erfassten Temperatur von 0°C und allen darunter liegenden Temperaturen eine maximale Ladespannung U_{L} von 28,26V ausgegeben. Bei einer von dem Temperatursensor 4 erfassten Temperatur von 50°C und allen darüber liegenden Temperaturen wird eine minimale Ladespannung U_{L} von 25,86V ausgegeben. In dem Bereich zwischen 0°C und 50°C steigt die optimale Ladespannung in dieser Ausführungsform abhängig von der Temperatur linear an. So wird beispielsweise bei einer von dem Temperatursensor 4 erfassten Temperatur von 20°C eine Ladespannung U_{L} von 27,3V ausgegeben.

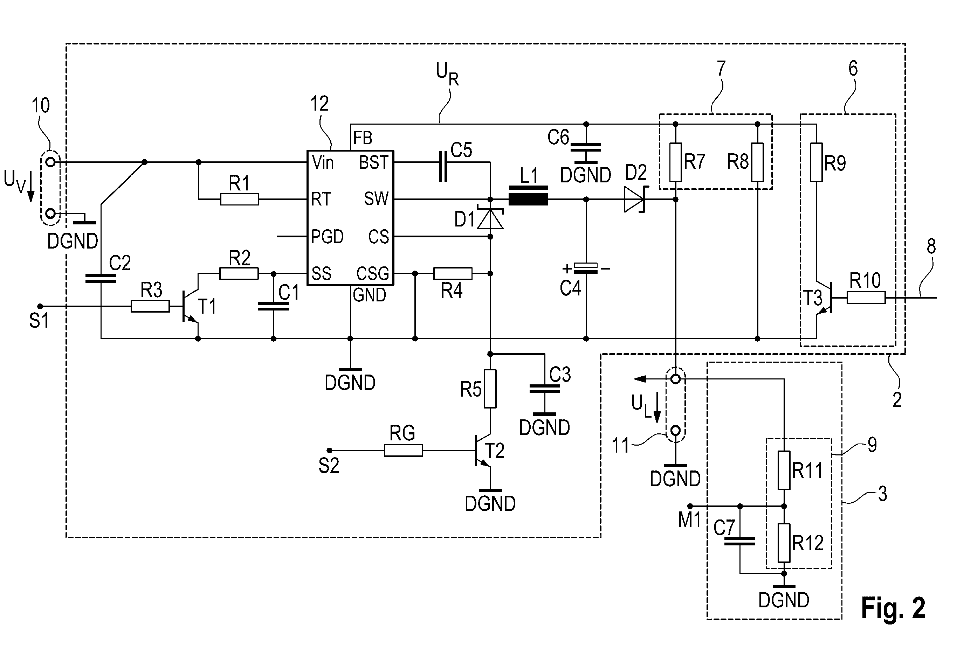

Durch die Korrektureinheit 6 wird Einfluss auf den achten Widerstand R8 des ersten Spannungsteilers 7 genommen. Die Schaltung verhält sich also so, als ob der Widerstandswert des achten Widerstand R8 durch eine Vergrößerung der Pulslänge des Korrektursignals verkleinert wird. Wird der Widerstandswert des achten Widerstandes R8 verkleinert, so verkleinert sich auch der Spannungsabfall an dem achten Widerstand R8 und somit wird auch die Regelspannung U_{R} verringert. Der Laderegler 2 erhöht daraufhin die Ladespannung U_{L} so weit, bis die Regelspannung U_{R} wieder gleich dem Wert der Inneren Referenz des Schaltbausteins 12, hier 2,51 Volt, ist. Bezogen auf die in Fig. 2 gezeigte Schaltung bedeutet dies, dass bei einer Pulslänge "0" des Korrektursignals, also bei abgeschaltetem Korrektursignal, der dritte Transistor T3 dauernd hochohmig ist und sich die niedrigste Ausgangsspannung als Ladespannung U_{L} an dem Akkumulator einstellt. Wird die Pulslänge des Korrektursignals erhöht, so erhöht sich die Ladespannung U_{L}, je länger die Pulslänge des Korrektursignals ist.

Die Korrektureinheit 6 wird in dieser Ausführungsform von dem Laderegler 2 umfasst und nimmt mittels des Korrektursignals Einfluss auf den Regelkreis des Ladereglers 2.

Figur 2 zeigt ein beispielhaftes Schaltbild des in Figur 1 gezeigten Ladereglers 2 mit der Korrektureinheit 6, sowie des Spannungssensors 3. Der Laderegler 2 umfasst einen Schaltbaustein 12, der zur Steuerung der in einem Abwärtsregler benötigten Schaltvorgänge geeignet ist. In dieser beispielhaften Ausführungsform ist der Schaltbaustein 12 der Schaltregler LM25011 von Texas Instruments. Ein erster Pin Vin des Schaltbausteins 12 ist mit einem Pol des Versorgungseingangs 10 verbunden. Somit liegt an dem ersten Pin Vin eine Versorgungsspannung U_{V} von + 35 Volt an. Über den ersten Pin Vin wird eine Versorgung des Schaltbausteins 12 sowie der über diesen Schaltbaustein 12 betriebenen Schaltungen gewährleistet.

Der Schaltbaustein 12 umfasst ferner einen zweiten Pin RT. Zwischen den ersten Pin Vin und den zweiten Pin RT ist ein erster Widerstand R1 geschaltet. Der erste Widerstand R1 hat einen Widerstandswert von 820kΩ. Durch den ersten Widerstand R1 wird eine Schaltfrequenz des Schaltbausteins 12 definiert.

Der Schaltbaustein 12 umfasst ferner einen dritten Pin PGD, welcher ein Signal zur Spannungsüberwachung ausgibt. Dieser dritte Pin PGD wird in der hier gezeigten Ausführungsform nicht genutzt.

Der Schaltbaustein 12 umfasst ferner einen vierten Pin SS, welcher eine Aktivierung und Deaktivierung des Schaltbausteins 12 und somit des Ladereglers 2 ermöglicht. Der vierte Pin SS ist über einen ersten Kondensator mit einer Schaltungsmasse DGND verbunden. Der vierte Pin SS ist ferner über einen zweiten Widerstand mit dem Kollektor eines ersten Transistors T1 verbunden. Der zweite Widerstand R2 hat einen Widerstandswert von 100Ω. Ein Emitter des ersten Transistors T1 ist mit der Schaltungsmasse DGND verbunden. Eine Basis des ersten Transistors T1 ist über einen dritten Widerstand R3 mit einem ersten Steuereingang S1 verbunden. Der dritte Widerstand R3 hat einen Widerstandswert von 4,7kΩ. Wird eine Steuerspannung an dem ersten Steuereingang S1 angelegt, so schaltet der erste Transistor T1 durch und ein Spannungspegel an dem vierten Pin SS wird durch die nun bestehende Masseverbindung über den zweiten Widerstand R2 abgesenkt. Der Schaltbaustein 12 gibt in diesem Fall das Schaltsignal nicht weiter aus.

Der Schaltbaustein 12 weist einen fünften Pin GND auf. Über den fünften Pin GND wird ein Massepotenzial des Schaltbausteins 12 definiert. Daher ist der fünfte Pin GND mit der Schaltungsmasse DGND verbunden.

Der erste Pin Vin ist über einen zweiten Kondensator C2 ebenfalls mit der Schaltungsmasse verbunden. Der zweite Kondensator C2 weist einen Kapazitätswert von 470nF auf. Durch den zweiten Kondensator C2 wird eine Glättung der Versorgungsspannung U_{V}, welche an dem ersten Pin Vin anliegt, erreicht.

Der Schaltbaustein 12 umfasst ferner einen siebten Pin CSG, welcher mit der Schaltungsmasse DGND verbunden ist. Der Schaltbaustein 12 weist ferner einen achten Pin CS auf, welcher über einen vierten Widerstand R4 mit dem siebten Pin CSG verbunden ist. Der vierte Widerstand R4 weist einen Widerstand von 330mΩ auf. Der Schaltbaustein 12 erfasst über den siebten Pin CSG und den achten Pin CS einen Spannungsabfall über den vierten Widerstand R4. Daraus wird ein Strom errechnet, welcher in einen von dem Schaltbaustein 12 gesteuerten Abwärtswandler fließt. Der Schaltbaustein 12 regelt das von ihm abgegebene Schaltsignal entsprechend, um diesen Strom zu begrenzen. Der achte Pin CS ist ferner über einen dritten Kondensator C3 mit der Schaltungsmasse DGND verbunden. Der dritte Kondensator C3 hat einen Kapazitätswert von 10nF. Der achte Pin CS des Schaltbausteins 12 ist ferner über einen fünften Widerstand R5 mit einem Kollektor eines zweiten Transistors T2 verbunden. Der fünfte Widerstand R5 hat einen Widerstandswert von 33 mΩ. Ein Emitter des zweiten Transistors T2 ist mit der Schaltungsmasse DGND verbunden. Eine Basis des zweiten Transistors T2 ist über einen sechsten Widerstand R6 mit einem zweiten Steuereingang S2 verbunden. Der sechste Widerstand R6 hat einen Widerstandswert von 10 kΩ. Wird ein Signal an den zweiten Steuereingang S2 angelegt, so kann durch dieses der Widerstand zwischen dem Kollektor und dem Emitter des zweiten Transistors T2 gesteuert werden. Somit kann ein zusätzlicher Strom über den fünften Widerstand R5 und den zweiten Transistor T2 in den von dem Schaltbaustein 12 gesteuerten Abwärtswandler fließen. Da dieser Strom über den fünften Widerstand R5 jedoch nicht über den Spannungsabfall über den vierten Widerstand R4 erfasst wird, wird somit eine Regelung des maximalen Stromes, welcher durch den von dem Schaltbaustein 12 gesteuerten Abwärtswandler fließt, ermöglicht.

Der Schaltbaustein 12 umfasst ferner einen neunten Pin SW, durch den das Schaltsignal zum Schalten des Abwärtswandlers ausgegeben wird. Der von dem Schaltbaustein 12 gesteuerte Abwärtswandler wird durch eine erste Diode D1, eine erste Spule L1 und einen vierten Kondensator C4 gebildet. Die erste Diode D1 ist mit ihrer Katode mit dem neunten Pin SW verbunden. Die erste Diode D1 ist ferner mit ihrer Anode mit dem achten Pin CS des Schaltbausteins 12 verbunden. Ferner ist der neunte Pin SW mit einer ersten Seite der ersten Spule L1 verbunden. Eine zweite Seite der ersten Spule L1 ist über den vierten Kondensator C4 mit der Schaltungsmasse DGND verbunden. Die zweite Seite der ersten Spule L1 ist ferner mit der Anode einer zweiten Diode D2 verbunden. Die Katode der zweiten Diode D2 ist wiederum mit einem Pol des Ladeausgangs 11 verbunden. An dieser Stelle wird somit die Ladespannung U_{L} für den Akkumulator 20 bereitgestellt. Ein zweiter Pol wird durch die Schaltungsmasse DGND gebildet.

Die Katode der zweiten Diode D2 ist ferner über einen siebten Widerstand R7 mit einem sechsten Pin FB des Schaltbausteins 12 verbunden. Der siebte Widerstand R7 hat einen Widerstandswert von 47kΩ. Der Schaltbaustein 12 regelt das Schaltsignal, welches an dem neunten Pin SW ausgegeben wird, derart, dass eine Regelspannung U_{R}, welche an dem sechsten Pin FB anliegt, auf einem Spannungswert von 2,51 Volt gehalten wird.

Der sechste Pin FB des Schaltbausteins 12 ist ferner über einen achten Widerstand R8 mit der Schaltungsmasse DGND verbunden. Der achte Widerstand R8 hat einen Widerstandswert von 5,6kΩ. Es ist ersichtlich, dass aus dem siebten Widerstand R7 und dem achten Widerstand R8 ein Spannungsteiler, nämlich der erste Spannungsteiler 7 gebildet wird. Die Regelspannung U_{R} ist somit zum einen von der Ladespannung U_{L} und zum anderen von den Widerstandswerten des siebten Widerstandes R7 und des achten Widerstandes R8 abhängig. Die Widerstandswerte des siebten Widerstandes R7 und des achten Widerstandes R8 sind dabei so gewählt, dass von dem Laderegler 2 eine Ladespannung U_{L} ausgegeben wird, die einer minimalen erforderlichen Ladespannung entspricht mit welcher der Akkumulator bei entsprechender Umgebungstemperatur geladen werden soll, wenn keine Beeinflussung des ersten Spannungsteilers 7 durch die Korrektureinheit 6 erfolgt. Das bedeutet, dass die Regelspannung U_{R} in diesem Falle einen Spannungswert von 2,51 Volt hat. Dies ist erforderlich, da die Ladespannung U_{L} in dieser Ausführungsform durch eine Beeinflussung des ersten Spannungsteilers 7 durch die Korrektureinheit 6 gegenüber der minimalen erforderlichen Ladespannung lediglich erhöht werden kann.

Der Schaltbaustein 12 umfasst ferner einen zehnten Pin BST, der über einen fünften Kondensator C5 mit dem neunten Pin SW verbunden ist. Der fünfte Kondensator C5 hat einen Kapazitätswert von 100nF. Durch den fünften Kondensator C5 wird ein sogenannter Bootstrap-Kondensator bereitgestellt, der ein sauberes Schalten eines Schaltkondensators des Schaltbausteins 12 ermöglicht, der das Schaltsignal generiert.

Der erfindungsgemäße Regelkreis wird somit in dieser Ausführungsform durch die erste Spule L1, die zweite Diode D2, den ersten Spannungsteiler 7 sowie den Schaltbaustein 12 gebildet. Der Laderegler 2 umfasst somit einen Regelkreis, in dem die Ladespannung U_{L} mittels eines ersten Spannungsteilers 7 geteilt wird und eine durch den Spannungsteiler 7 verringerte Spannung, in diesem Falle die Regelspannung U_{R}, als Regelsignal zur Stabilisierung der Ladespannung U_{L} durch den Laderegler 2 genutzt wird.

Es wird darauf hingewiesen, dass durch eine entsprechende Wahl des Widerstandswertes für den siebten Widerstand R7 und den achten Widerstand R8 in dem ersten Spannungsteiler 7 eine einfache Anpassung der Ladespannung möglich ist.

Wie bereits beschrieben umfasst der Laderegler 2 in dieser Ausführungsform die Korrektureinheit 6. Die Korrektureinheit 6 umfasst einen neunten Widerstand R9, einen zehnten Widerstand R10 und einen dritten Transistor T3. Der neunte Widerstand R9 hat einen Widerstandswert von 1kΩ und der zehnte Widerstand R10 hat einen Widerstandswert von 4,7kΩ. Der neunte Widerstand R9 ist zwischen einen Kollektor des dritten Transistors T3 und dem sechsten Pin FB des Schaltbausteins 12 geschaltet. Ein Emitter des dritten Transistors T3 ist mit der Schaltungsmasse DGND verbunden. Eine Basis des dritten Transistors T3 ist über den zehnten Widerstand R10 mit der Steuerleitung 8 verbunden, welche durch die Steuereinheit 5 mit dem pulsweitenmodulierten Signal beaufschlagt werden kann. Die Korrektureinheit 6 umfasst somit einen Transistor, hier den dritten Transistor T3, der parallel zu einem Widerstand des ersten Spannungsteilers 7, hier den achten Widerstand R8, geschaltet ist.

Es ergibt sich daraus, dass für einen Fall, in dem das pulslängenmodulierte Signal eine Pulslänge von 0 hat, der dritte Transistor in einen offenen Zustand schaltet, wodurch keine elektrisch leitende Verbindung zwischen dem Kollektor und dem Emitter des dritten Transistors T3 besteht. Die Korrektureinheit 6 nimmt somit keinerlei Einfluss auf den Regelkreis. Mit steigender Pulsdauer des pulsweitenmodulierten Signals wird der neunte Widerstand R9 zeitweise zu dem achten Widerstand R8 parallel geschaltet. Somit nimmt die Korrektureinheit 6 mittels des Korrektursignals Einfluss auf einen Widerstand des ersten Spannungsteilers 7. Es ergibt sich, dass die Regelspannung U_{R} abhängig von der Pulslänge des pulsweitenmodulierten Signals ansteigt oder abfällt. Der Schaltbaustein 12 kompensiert diesen Anstieg oder dieses Abfallen durch eine Anpassung der Pulsweite des Schaltsignals. Somit ergibt sich, dass die Ladespannung U_{L} entweder ansteigt oder abfällt, damit die Regelspannung U_{R} wieder den vorgegebenen Zielwert von 2,51 Volt annimmt.

Zusätzlich ist der sechsten Pin FB des Schaltbausteins 12 über einen sechster Kondensator C6 mit der Schaltungsmasse DGND verbunden. Der sechste Kondensator C6 hat einen Kapazitätswert von 10nF. Der sechste Kondensator C6 dient einer Glättung der Regelspannung U_{R}, welche ansonsten aufgrund der lediglich zeitweisen Zuschaltung des neunten Widerstandes R9 entsprechend einer Pulslänge des pulsweitenmodulierten Signals stark schwanken würde. Der Laderegler 2 umfasst somit einen Kondensator, hier den sechsten Kondensator C6, zum Glätten des Regelsignals, das hier durch die Regelspannung U_{R} in deren zeitlichen Verlauf gebildet wird.

Ferner ist in Figur 2 ein Schaltbild des Spannungssensors 3 gezeigt. Der Spannungssensor 3 umfasst einen elften Widerstand R11, einen zwölften Widerstand R12 und einen siebten Kondensator C7. Der elfte Widerstand R11 weist einen Widerstandswert von 120kΩ auf. Der zwölfte Widerstand R12 weist einen Widerstandswert von 22kΩ auf. Der siebte Kondensator C7 weist einen Kapazitätswert von 1 nF auf. Die Katode der zweiten Diode D2 ist über den elften Widerstand R11 mit einem Messausgang M1 verbunden. Der Messausgang M1 ist über den siebten Kondensator C7 mit der Schaltungsmasse DGND verbunden. Der Messausgang M1 ist ferner über den zwölften Widerstand R12 mit der Schaltungsmasse DGND verbunden. Der elfte Widerstand R11 und der zwölfte Widerstand R12 bilden somit einen zweiten Spannungsteiler 9. Durch diesen zweiten Spannungsteiler 9 wird die Ladespannung U_{L} geteilt und an den Messausgang M1 als analoger Messwert ausgegeben, welcher der Steuereinheit 5 bereitgestellt wird.

Der in Figur 2 abgebildete Laderegler zeigt somit einen typischen Aufbau einer Abwärtswandlerschaltung. Eine Versorgungsspannung U_{V}, hier 35 Volt, wird herabgesetzt auf eine niedrigere Ladespannung U_{L}. Dies erfolgt, indem der Schaltbaustein 12 das entsprechend getaktete Schaltsignal ausgibt. Der Laderegler regelt die Ausgangsspannung, also die Ladespannung U_{L}, über den ersten Spannungsteiler 7. Die Ladespannung U_{L} wird so geregelt, dass sich über den ersten Spannungsteiler 7 an dem sechsten Pin FB des Schaltbausteins 12, der einen Feedbackeingang bildet, ein Spannungswert der Regelspannung von 2,51 Volt einstellt. Somit wird die Ladespannung U_{L} durch den Regelkreis auf diesen durch den ersten Spannungsteiler 7 fest eingestellten Wert geregelt. Erfindungsgemäß wird dieser fest eingestellte Wert beeinflusst. Dies erfolgt in einer Weise, dass sich die Ladespannung U_{L} in der Art ändert, dass dadurch der Akkumulator 20 temperaturgeführt geladen werden kann.

Ein zu der Vorrichtung 1 zum Laden von Akkumulatoren 20 gehörender Mikrocontroller, der von der Steuereinheit 5 umfasst wird, misst die Temperatur über den Temperatursensor 4 sowie die vom Laderegler 2 ausgegebene Ladespannung U_{L} über den Spannungssensor 3 und somit über den zweiten Spannungsteiler 9. Soll die Ladespannung U_{L} aufgrund einer Änderung der Umgebungstemperatur des Akkumulators 20 erhöht werden, so wird der dritte Transistor T3 durch das von diesem Mikrocontroller generierte Korrektursignal, also das pulsweitenmodulierte Signal, angesteuert. Ein solches pulsweitenmoduliertes Signal könnte beispielsweise in einem Bereich von 10 Kilohertz arbeiten. Durch dieses rechteckförmige Signal wird ein Wert des ersten Spannungsteilers 7 in Zusammenwirkung mit dem sechsten Kondensator C6 verändert. Durch den sechsten Kondensator C6 wird das Integral der Rechteckspannung gebildet und der Laderegler 2 erhöht seine Ausgangsspannung, also die Ladespannung U_{L}, im Verhältnis zur Pulsweitenmodulation.

Die Temperatur ausgegebene Ladespannung U_{L} wird über den Temperatursensor 4 fortwährend erfasst und die optimale Ladespannung beständig aktualisiert. Somit wird auch das Korrektursignal zyklisch aktualisiert und die Ladespannung U_{L} wird beständig auf einen Spannungswert der optimale Ladespannung geregelt.

In weiteren Ausführungsformen der Erfindung wird das Korrektursignal von der Steuereinheit 5 erst in einer abschließenden Phase eines Ladevorgangs ausgegeben. Dazu wird die Ladespannung U_{L} über den Spannungsmesswert, der von dem Spannungssensor 3 an die Steuereinheit 5 geliefert wird, überwacht. Erreicht die Ladespannung U_{L} einen vorgegebenen Schwellenwert, so wird ab diesem Zeitpunkt das Korrektursignal von der Steuereinheit 5 abgegeben.

In weiteren Ausführungsformen der Erfindung, welche im Wesentlichen den zuvor beschriebenen Ausführungsformen entspricht, ermittelt die Steuereinheit 5 das Korrektursignal ferner basierend auf einer Bauart oder einer Anzahl angeschlossener Akkumulatoren. Dabei wird die Ladespannung entsprechend den Anforderungen des oder der jeweils angeschlossenen Akkumulatoren angepasst. Dies erfolgt beispielsweise dadurch, dass die Steuereinheit die Pulslänge des Korrektursignals erhöht oder absenkt. Für eine Ausführung dieser weiteren Ausführungsform ist eine Auslegung der genutzten Schaltungskomponenten vorteilhaft, da bei der zuvor beschriebenen Auslegung der Änderungsbereich der Ladespannung zu gering sein kann.

### Bezugszeichenliste

- 1: Vorrichtung zum Laden von Akkumulatoren
- 2: Laderegler
- 3: Spannungssensor
- 4: Temperatursensor
- 5: Steuereinheit
- 6: Korrektureinheit
- 7: erster Spannungsteiler
- 8: Steuerleitung
- 9: zweiter Spannungsteiler
- 10: Versorgungseingang
- 11: Ladeausgang
- 12: Schaltbaustein
- U_{V}: Versorgungsspannung
- U_{L}: Ladespannung
- U_{R}: Regelspannung
- S1: erster Steuereingang
- S2: zweiter Steuereingang
- M1: Messausgang
- DGND: Schaltungsmasse
- Vin: erster Pin
- RT: zweiter Pin
- PGD: dritter Pin
- SS: vierter Pin
- GND: fünfter Pin
- FB: sechster Pin
- CSG: siebter Pin
- CS: achter Pin
- SW: neunter Pin
- BST: zehnter Pin
- R1: erster Widerstand
- R2: zweiter Widerstand
- R3: dritter Widerstand
- R4: vierter Widerstand
- R5: fünfter Widerstand
- R6: sechster Widerstand
- R7: siebter Widerstand
- R8: achter Widerstand
- R9: neunter Widerstand
- R10: zehnter Widerstand
- R11: elfter Widerstand
- R12: zwölfter Widerstand
- C1: erster Kondensator
- C2: zweiter Kondensator
- C3: dritter Kondensator
- C4: vierter Kondensator
- C5: fünfter Kondensator
- C6: sechster Kondensator
- C7: siebter Kondensator
- D1: erste Diode
- D2: zweite Diode
- L1: erste Spule
- T1: erster Transistor
- T2: zweiter Transistor
- T3: dritter Transistor

## Patentansprüche

1. Vorrichtung (1) zum Laden von Akkumulatoren (20), umfassend:
- einen Laderegler (2), zum Bereitstellen einer Ladespannung (U_{L}), wobei der Laderegler (2) einen Regelkreis umfasst, in dem die Ladespannung (U_{L}) mittels eines ersten Spannungsteilers (7) geteilt wird und eine durch den ersten Spannungsteiler (7) verringerte Spannung (U_{R}) als Regelsignal zur Stabilisierung der Ladespannung (U_{L}) durch den Laderegler (2) genutzt wird,
- einen Spannungssensor (3), zum Erfassen der Ladespannung (U_{L}),
- einen Temperatursensor (4) zum Messen einer Temperatur,
- eine Steuereinheit (5), die eine optimale Ladespannung basierend auf der gemessenen Temperatur ermittelt und ein Korrektursignal basierend auf einer Abweichung der Ladespannung (U_{L}) von der optimalen Ladespannung ausgibt, und
- eine Korrektureinheit (6), die mittels des Korrektursignals auf zumindest einen Widerstand des ersten Spannungsteilers (7) Einfluss nimmt.

2. Vorrichtung gemäß Anspruch 1, **dadurch gekennzeichnet, dass** der Temperatursensor (3) eine Temperatur des Akkumulators (20) misst.

3. Vorrichtung gemäß einem der vorangehenden Ansprüche, **dadurch gekennzeichnet, dass** der Temperatursensor (3) die Temperatur fortwährend misst und die Steuereinheit die optimale Ladespannung kontinuierlich ermittelt.

4. Vorrichtung gemäß einem der vorangehenden Ansprüche, **dadurch gekennzeichnet, dass** der Spannungssensor (3) einen zweiten Spannungsteiler (9) umfasst.

5. Vorrichtung gemäß einem der vorangehenden Ansprüche, **dadurch gekennzeichnet, dass** die Korrektureinheit (6) einen Transistor umfasst, der parallel zu einem Widerstand des ersten Spannungsteilers (7) geschaltet ist.

6. Vorrichtung gemäß Anspruch 3, **dadurch gekennzeichnet, dass** das Korrektursignal ein pulsweitenmoduliertes Signal ist.

7. Vorrichtung gemäß einem der vorangehenden Ansprüche, **dadurch gekennzeichnet, dass** der Laderegler (2) einen Kondensator zum Glätten des Regelsignals umfasst.

8. Vorrichtung gemäß einem der vorangehenden Ansprüche, **dadurch gekennzeichnet, dass** die Steuereinheit (5) das Korrektursignal ferner basierend auf einer Bauart oder einer Anzahl angeschlossener Akkumulatoren ermittelt.

9. Vorrichtung gemäß einem der vorangehenden Ansprüche, **dadurch gekennzeichnet, dass** die Steuereinheit (5) das Korrektursignal erst in einer abschließenden Phase eines Ladevorgangs ausgibt.

10. Verfahren zum Laden von Akkumulatoren (20), umfassend die Schritte:
- Bereitstellen einer Ladespannung (U_{L}) durch einen Laderegler (2), wobei der Laderegler (2) einen Regelkreis umfasst, in dem die Ladespannung (U_{L}) mittels eines ersten Spannungsteilers (7) geteilt wird und eine durch den ersten Spannungsteiler (7) verringerte Spannung (U_{R}) als Regelsignal zur Stabilisierung der Ladespannung (U_{L}) durch den Laderegler (2) genutzt wird,
- Erfassen der Ladespannung (U_{L}),
- Messen einer Temperatur durch einen Temperatursensor (4),
- Ermitteln einer optimale Ladespannung (5), wobei die optimale Ladespannung basierend auf der gemessenen Temperatur ermittelt wird,
- Ausgeben eines Korrektursignals basierend auf einer Abweichung der Ladespannung (U_{L}) von der optimalen Ladespannung, und
- Einflussnehmen auf zumindest einen Widerstand des ersten Spannungsteilers (7) mittels des Korrektursignals.
